# EUROPEAN PATENT APPLICATION

(11) **EP 1 494 449 A1**
(43) Date of publication of application: **05.01.2005**
(21) Application number: 04014250.7
(22) Date of filing: 17.06.2004
(51) Int. Cl.: H04N 1/10, H04N 1/00

(54) **Assembly of original reading device and original placing tray**

(30) Priority: 04.07.2003 JP 2003191718
(71) Applicant: RISO KAGAKU CORPORATION, Tokyo (JP)
(72) Inventor: Wakatabi, Tadayuki Riso Kagaku Corp. R&D Center, Inashiki-gun, Ibaraki-ken (JP); Mitani, Kouki Riso Kagaku Corp. R&D Center, Inashiki-gun, Ibaraki-ken (JP)
(74) Representative: Winter, Brandl, Fürniss, Hübner, Röss, Kaiser, Polte Partnerschaft

(57) **Abstract**

To make to possible to read an original image by an original reading device employing an image sensor and to make a post card of an original which is prepared on a plane surface facing upward, the prepared original is held as it is, and the original reading device is placed upon the original to read the original as precisely positioned thereto, the original reading device is provided with a pair of sectoral indents of an arcuate contour and a pair of cylindrical small holes opening adjacent to the sectoral indents at one end portion of each of a pair of sides of the surface thereof in which an original reading window is provided, while the original placing tray is provided with a pair of sectoral projections of an arcuate contour and a pair of columnar small projections adapted to engage with the pair of sectoral indents and the pair of cylindrical small holes of the original reading device, respectively.

## Description

### Background of the Invention

### Field of the Invention

The present invention relates to a device for reading an image of an original and generating an electrical signal expressing the image in making a letter by a card in which individual expressions of a sender are important as in the new year card, the inquiry after his/her health in the hot season, and the Christmas card. (These cards are referred to as "post cards" hereinunder.) Further, the "making" of the post card herein referred to means all works starting from a creation of an image of the post card to the printing of the image on the post card, while the combination of an original reading device and an original placing tray according to the present invention executes a former half of the all works.

### Description of the Prior Art

The post cards are golden means for each sender to let his/her friends or acquaintances, mostly long neglected to write, remember him/her with an exhibition of his/her individuality, and therefore, it is strongly desired that they are designed by each individual creation. However, except those very limited persons who are daily executing the techniques suited for making the post cards such as the writers of comic pictures or illustrations or the calligraphers, it is very difficult for many people to individually create the post cards to be satisfactorily designed. Therefore, there are distributed various design collections for the new year cards or the like bearing prints of various pictures, patterns or letters prepared by the professionals, so that some of those pictures, patterns or letters are optionally cut out therefrom to make the post cards by a combination of them, with an addition of one's own writing, when desired.

As a post card making device convenient for designing post cards by a combination of those pictures or the like and printing, the applicant of the present application has once proposed a device called "PRINTGOCCO" (Trademark) which executes the post card making by an art of stencil printing, as described in Japanese Utility Model Publication Showa 57-15814. This device comprises a lower frame presenting an original placing tray of a size of the post card, and an upper frame connected to the lower frame to be pivotable up and down relative thereto, the upper frame having a glass window positioned so as to be laid over the original placing tray when the upper frame is closed upon the lower frame, wherein a stencil plate is mounted to the lower face of the glass window, and a flash lamp is turned on from the upper side of the glass window. By using such a device, when a desired image is designed on the original placing tray by assembling cut out pictures, letters or the like, then the upper frame is lowered toward the lower frame with a stencil plate mounted to the lower face of the glass plate to be laid over the assembled image, then the stencil plate is pressed upon the assembled image, and then the flash lamp is turned on above the glass plate, a stencil printing plate perforated according to the assembled image is obtained, to be able to make post cards bearing individually original designs even by an assembly of cut out pictures, letters or the like.

However, nowadays it has become possible to readily make an assembled image by assembling prepared picture elements, letters and the like in the display of a computer according to the developments of the image processing technique by computer. Nevertheless, the image processing by computer demands a basic knowledge with regard to the operation of the computer and a substantial knowledge and training with regard to the handling of the respective image processing software programs. There is a substantial difficulty in demanding such knowledge and trainings by the current middle and high aged people.

The matters concerned with the computer and various computer software programs are mostly mere matters of stipulation, not theoretically systemized. Therefore, they can be half habitually executed when daily practiced, while when not practiced for a while, the execution thereof is puzzling as the first time execution. The new year cards and the Christmas cards are made one time in a year. Therefore, even for those who are customized to send post cards for inquiring his/her health in the hot season, it is every half year to make the post cards. For those not daily practicing the computer, the operation of the computer, particularly the image processing by the computer after a half year or a year is every time a very difficult work

Further, it is often desired to enter some words of compliments by one's own autograph in the new year cards, hot season inquiring cards or Christmas cards. This is not available in the computer display. Of course, when there is a scanner, it is possible to write such words by autograph once on a sheet and to bring them into the computer by letting the scanner read them. However, to do so the scanner is required in addition to the computer and the printer, and a further knowledge with regard to the connection and the handling of the scanner.

On the other hand, the developments of the digital color printing technique employing the ink jet combined with the computer are remarkable, with a steep increase of the quality and speed of printing, while the prices of the printers are rapidly lowing as inversely proportional. The benefits provided by such developments of the digital color printing technique should be widely and equally enjoyed as not limited to those familiar with the computers.

In view of the above situations, as a post card making device by which the art of assembling cut out pictures, letters or the like practiced with the conventional PRINTGOCCO is also usable to make the new year card, hot season inquiring cards, Christmas cards and the like, for those not daily familiar with the computers, while utilizing the ink jet printers whose performance is daily improving with their prices daily lowering, the present applicant has proposed by Japanese Patent Application 2002-266706 "a post card making device characterized by a combination of an original reading device having an original reading window of a size of the post card and an image sensor for reading an image exhibited to the original reading window to generate an image signal expressing the read in image, an image printing device constructed as a device separate from the original reading device to comprise a signal processing means for processing the image signal and a fine ink jet digital color printing means for printing an image corresponding to the image signal, and a signal transmitting means for transmitting the image signal from the original reading device to the image printing device".

In the post card making device shown as an embodiment in the above-mentioned prior patent application, the original reading device having a housing of an external shape like a rectangular thick plate with an original reading window of a size of the post card in one face of the housing and an image sensor mounted in the housing to read an image exhibited to the original reading window to generate the image signal expressing the read-in image, is equipped with a cover plate hinged along one side of the rectangular contour thereof so that the original reading device is placed on a table or the like with its original reading window facing upward, then an original of a post card is designed by combining cut out pictures, letters or the like on the upwardly facing original reading window serving as an original placing tray, and when an image was designed on the original reading window by combining cut out pictures, letters or the like, the original reading device can be operated not to disturb the design. To do so, after the completion of a designing, the cover plate is turned along the hinge so as to be placed over the original reading window to press the designed original from above, not to disturb the design of the original. In this case however, for the original designed on the original reading window to be pressed from above by the cover plate after the completion, the original reading window must be a window opened upward, and therefore the original must be prepared toward downward. This is inconvenient for the designing work. When the original was designed on an optional plane surface such as a table surface or the like, the original reading device must be placed on the original with its original reading window facing downward, making it difficult to softly place the original reading device on the original as correctly positioned relative thereto without disturbing an image formed by a combination of cut out of pictures, letters or the like.

### Summary of the Invention

It is the object of the present invention to make it possible that, in making the post card by reading an original image by the original reading device employing the image sensor as described above, the original can be made on a plane surface facing upward like an ordinary desk work, the original thus produced may be held as it is, and the original reading device can be placed on the original as precisely positioned relative to the image of the original without disturbing the image even when it is made of a combination of cut out pictures, letters or the like.

According to the present invention, the above-mentioned object is accomplished by an assembly of an original reading device and an original placing tray comprising a combination of an original reading device having a housing of an external shape like a rectangular thick plate with an original reading window of a size of a post card in one face thereof and an image sensor provided in the housing for reading an image exhibited to the original reading window and generating an image signal expressing the read-in image, and an original placing tray for supporting a sheet exhibiting an image as positioned relative to the original reading device when the image is read in by the original reading device, the original reading device having a pair of sectoral indents of an arcuate contour each formed along an end portion of a pair of opposite sides of the rectangular contour of the face of the housing in which the original reading window is provided and a pair of cylindrical small holes opening adjacent to the pair of sectoral indents in the face where the original reading window is provided, the original placing tray having a pair of sectoral projections of an arcuate contour and a pair of columnar projections adapted to engage into the pair of sectoral indents and the pair of cylindrical holes, respectively, when the original reading device is placed upon the original placing tray as aligned thereto in a predetermined condition.

The sectoral indents may have each a sectoral contour of a quarter of a circle. In that case, the arcuate contour of each of the sectoral projections may be an arc to rotatably touch an inside of each of the arcuate indents.

The sectoral indents may be formed each at one edge portion of each of a pair of shorter sides of the rectangular contour of the housing of the original reading device.

The original placing tray may have a card placing portion like a plane plate for receiving a rectangular card, a first spring plate portion formed with a cut out presenting rectangular edges to contact two sides of an edge of a card placed on the card placing portion from outside thereof, and a second spring plate portion presenting an edge to contact a side of the card placed on the card placing portion from outside thereof, the first and second spring plate portions being so conditioned that the rectangular edges and the one edge thereof projecting from a plane upper surface of the card placing portion, while elastically bent when pressed at the portions of the rectangular edges and the one edge so that the rectangular edges and the one edge are retreated from the projecting positions.

When the original reading device having the housing of an external shape like a rectangular thick plate with the original reading window of a size of the post card in one surface thereof and the image sensor mounted in the housing for reading the image exhibited to the original reading window and generating an image signal expressing the image is combined with the original placing tray serving as a means for supporting the sheet exhibiting the image as positioned relative to the original reading device when the image is read in by the original reading device, such that the original reading device has the pair of sectoral indents of the arcuate contour formed along the pair of opposite sides each at one edge portion of each of the sides of the rectangular contour of the surface of the housing in which the original reading window is provided and the pair of cylindrical small holes opening adjacent to the pair of sectoral indents in the surface where the original reading window is provided, while the original placing tray is provided with the pair of sectoral projections of the arcuate contour and the pair of columnar projections adapted to engage into the pair of sectoral indents and the pair of cylindrical small holes, respectively, when the original reading device is positioned upon the original placing tray as positioned thereto in a predetermined condition, the original may be made on the original placing tray as facing upward, and the original reading device may be descended upon the original placing tray in a style somewhat inclined with the original reading window facing downward by holding the original reading device by hands, such that the pair of sectoral indents of the original reading device are placed upon the pair of sectoral projections, thereby obtaining a hinge function by the contact between the sectoral indents and the sectoral projections, then turning down the original reading device toward the original placing tray, with the original reading device being guided relative to the original placing tray within a small deviation relative to the predetermined positioning by the hinge function. Then, just before the original reading device is placed upon the original placing tray, the pair of columnar projections of the original placing tray engage into the pair of cylindrical small holes of the original reading device, finally positioning the original reading device relative to the original placing tray, stably holding the positioning thereafter.

By the arcuate contour of the sectoral indents being an arcuate of a quarter of a circle, when the original reading device is turned toward the original placing tray from a state where the angle of inclination is substantially rectangular until the original reading device is laid over the original placing tray, the engagement of the sectoral projections to the arcuate portions of the sectoral indents provides a hinge function enough to stably guide the turning of the original reading device relative to the original placing tray. Since this hinge function is available by the engagement of the arcuate indent and the arcuate projection, different from an ordinary hinge by a hole and a pin, no such work of passing a pin through a hole is required, while the hinge function can be readily cancelled any time when desired, so that the placing of the original reading device onto the original placing tray can be cancelled any time in the way according to the convenience. When the arcuate contour of the sectoral indent is a quarter of a circle, while the arcuate contour of the sectoral projection is an arcuate to rotatably contact the inside surface of the sectoral arcuate, the engagement of the sectoral indents and the sectoral projections provides a smooth hinge function. In order for the arcuate contour of the sectoral projection to rotatably contact with the inside of the sectoral indent, the arcuate of the sectoral projection may be of a smaller radius than the arcuate of the sectoral indent In this case, the contour of the sectoral projection may be formed such that the entire arcuate portion has a smaller radius than the arcuate of the sectoral indent, or the arcuate contour of the sectoral projection may be a combination of a plurality of arcuate portions, wherein a part of the assembled arcuate is in coincidence with the arcuate of the sectoral indent

When the sectoral indents are formed each at one end portion of each of the pair of opposite shorter sides of the rectangular contour of the housing, a pair of hinges by the engagement of the pair of sectoral indents and the pair of sectoral projections are spaced along the longer side of the rectangular contour of the original reading device, so that a larger spacing distance between the pair of hinges is available as compared with a case where the pair of hinges are spaced along the shorter side of the rectangular contour, providing a more stable guide for turning.

When the original placing tray has the card placing portion like a plane portion for supporting a rectangular card, the first spring sheet portion formed with a cut out presenting rectangular edges to contact two sides of an edge portion of the card placed upon the card placing portion from its outside, and a second spring sheet portion presenting an edge to contact a side of the card placed upon the card placing portion from its outside, the first and second spring sheet portions being formed such that the rectangular edges and the one edge are normally projecting from the plane upper surface of the card placing portion and they are elastically bent by the portions of the rectangular edges and the one edge being pressed from above so that the rectangular edges and the one edge are retreated from the projecting position, the first and second spring sheet portions are pressed at right angle relative to the direction of extension thereof by the surface of the original reading device where the original reading window is provided just before the original reading device is placed upon the original placing tray, whereby even when these spring sheet portions are so constructed that the rectangular edges and the one edge project relatively largely from the original placing surface for an easy positioning of the original, the rectangular edges and the one edge are smoothly pressed by the surface of the original reading device where the original reading window is provided.

### Brief Description of the Drawings

In the accompanying drawings,
Fig. 1 is a perspective view showing an embodiment of the combination of the original reading device and the original placing tray in the state separated from one another;
Fig. 2 is a perspective view showing a state in the process of the original reading device shown in Fig. 1 being placed onto the original placing tray showing in Fig. 1; and
Fig. 3 is a perspective view showing the state that the original reading device of Fig. 1 was placed upon the original placing tray shown in Fig. 1.

### Description of the Preferred Embodiment

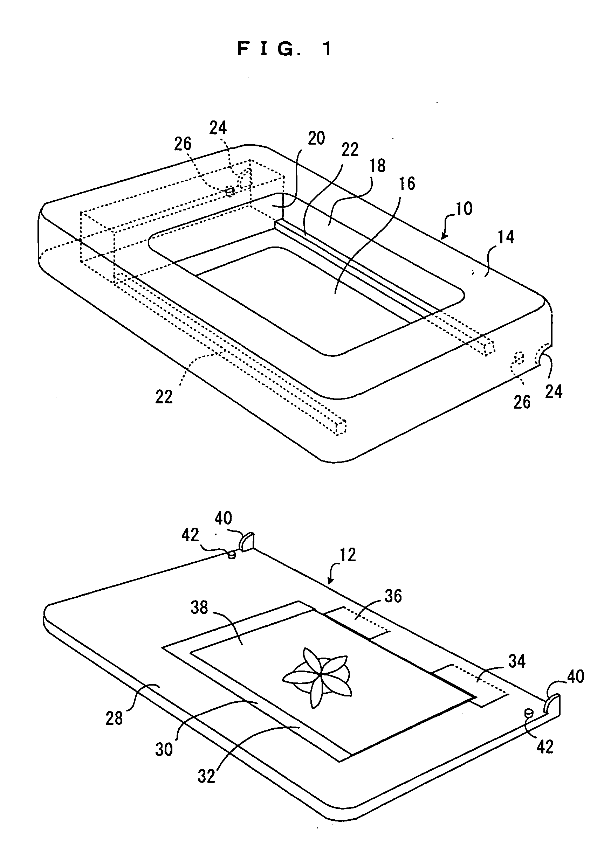

In these figures, 10 is the original reading device, and 12 is the original placing tray. The original reading device 10 has a housing 14 of an external contour like a rectangular thick plate as will be readily understood from Figs. 1, 2 and 3. It is to be noted that the "rectangular" herein referred to does not mean the geometrically precise "rectangular", but means a shape which may be called substantially rectangular as a shape of a practical body. The housing 14 is provided with an original reading window 16 closed by a transparent glass plate or the like in a lower surface thereof. The housing 14 is also provided with an original through viewing window 18 closed by a transparent glass plate or the like in its upper surface corresponding to the original reading window 16. Therefore, when the original reading device 10 is placed upon the original placing tray 12, an original placed upon the original placing tray 12 can be seen from upside through the original through viewing window 18 and original reading window 16.

The original reading device 12 is equipped with an image sensor 20 which itself is known in the art in its housing 14, the image sensor being adapted to reciprocate across the front of the original reading window 16 and the original through viewing window 18 as guided by a pair of guide rails 22, so that it illuminates the original by a light source incorporated therein, reads the original and generates an electric signal expressing the read-in image. At one end of each of a pair of shorter sides of the rectangular contour of the surface of the housing 14 in which the original reading window 16 is provided there are formed a pair of sectoral indents 24 of an arcuate contour along the shorter edges. In this shown embodiment, the arcuate contour of the sectoral indents 24 is an arc of a quarter of a circle. Adjacent to the pair of sectoral indents 24 there are formed a pair of cylindrical small holes 26 opening in the surface in which the original reading window 16 is provided.

The original placing tray 14 is made of a plate member 28 of a rectangular contour substantially coinciding with the rectangular plane contour of the original reading device 10. The plate member is provided with a rectangular original placing portion 30 which is lined by an elastic sheet 32 like a sponge so that even when an image is designed by laying cut out pictures, letters or the like one over the other, the surface of the original image can be in an even plane. Further, at an edge and along a side adjacent thereto of the rectangular original placing portion 30 there are provided original positioning means 34 and 36. The original positioning means 34 is an elastic piece provided with an angular cut out for receiving an edge of a rectangular original, the angular cut out portion presenting an angular edge slightly projecting from an upper surface of the elastic sheet 32 lining the original placing portion 30. The original positioning means 36 is an elastic piece formed with a linear edge for receiving a side of a rectangular original, the edged portion presenting a linear edge slightly projecting from the upper surface of the elastic sheet 32 lining the original placing portion 30. When a rectangular original 38 is placed on the original placing portion 30 with its one edge engaging the angular edges of the angular cut out portion of the original positioning means 34, while one side of the original engaging with the linear edge of the original positioning means 36, the rectangular original is placed on the original placing tray 12 as positioned in a predetermined condition relative to the plate member 28.

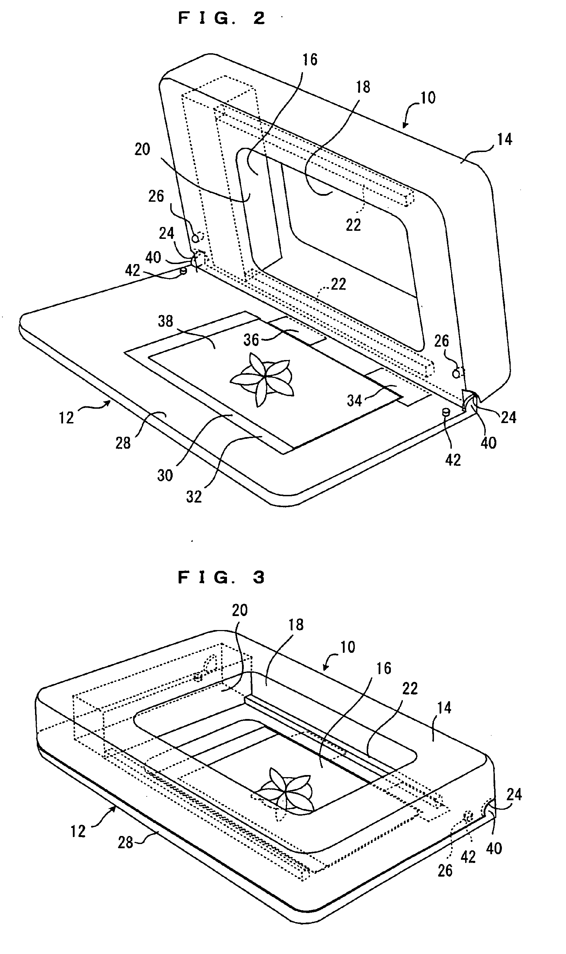

The plate member 28 of the original placing tray 12 is provided with a pair of sectoral projections 40 at one end of each of a pair of shorter sides of the rectangular contour thereof. The sectoral projections 40 have each a combined arcuate contour rotatably contacting the inside surface of the sectoral indents 24. Adjacent the pair of sectoral projections 40 there are provided a pair of columnar small projections 42. These pairs of sectoral projections 40 and columnar small projections 42 are adapted to align and engage with the pair of sectoral indents 24 and the pair of cylindrical small holes 26, respectively, when the original reading device 10 is placed over the original placing tray 12 as regularly positioned thereto as shown in Fig. 3, with the engagement of the sectoral indents 24 and the sectoral projections 40 and the engagement of the cylindrical small holes 26 and the columnar small projections 42 guiding and holding the regular relative position between the original placing tray 12 and the original reading device 10.

In use, the original placing tray 12 is placed alone on an optional working table like a desk as shown in Fig. 1, upon the original placing portion 30 of which there may be placed the rectangular original sheet 38 of the same size as the post card as positioned relative thereto by the original positioning means 34 and 36, and then the original image may be designed on the sheet

When the original image has been designed, the original reading device 10 is brought thereabove by hands as inclined as shown in Fig. 2 such that the pair of sectoral indents 24 of the original reading device 10 are placed on the pair of sectoral projections 40 of the original placing tray 12, and then the original reading device 10 is turned toward the original placing tray 12. In such a process, when the sectoral indents 24 are formed each to present an arcuate contour of an extension of about a quarter of a circle, while the sectoral projections 40 are formed arcuately to rotatably contact the sectoral indents 24, a hinge function is obtained by the sectoral projections 40 rotationally contacting the arcuate inside surfaces of the sectoral indents 24. The engagement of the sectoral indents 24 with the sectoral projections 40 provides a hinge function enough to stably guide the original reading device 10 to rotate relative to the original placing tray 12 along a straight line connecting a pair of the engagement contacts extending along a side (particularly a longer side in the shown embodiment) of the original reading device 10 and the original placing tray 12. Since the engagement of the arcuate indents and the arcuate projections can be readily dissolved any time when desired, if any problem occurs or is noted in the way of inclining the original reading device 10 toward the original placing tray 12, the placing of the original reading device 10 onto the original placing tray 12 can be stopped any time in the way.

When the turning of the original reading device 10 has proceeded so far that the original reading device 10 is just prior to lie over the original placing tray 12, the pair of columnar projections 42 of the original placing tray 12 engage into the pair of cylindrical small holes 26 of the original reading device 10. Although the engagement of the sectoral indents 24 and the sectoral projections 40 of an arcuate of the order of a quarter of a circle provides a hinge function enough to rotatably support the original reading device 10 when properly supported by hands, it is not sufficient for a precise positioning. Further, when the turning of the original reading device 10 proceeds so far that the original reading device 10 approaches to be parallel to the original placing tray 12, the engagement of the sectoral indents 24 and the sectoral projections 40 is liable to disengage as the original reading device 10 is apt to shift forward relative to the original placing tray 12. However, before that the pair of cylindrical small holes 26 of the original reading device 10 engage with the pair of columnar small projections 42 of the original placing tray 12, so that the regular positioning of the original reading device 10 relative to the original placing tray 12 is ensured and stably held.

Although the invention has been described in detail in the above with respect to an embodiment thereof, it will be apparent for those skilled in the art that various modifications are possible within the scope of the present invention.

## Claims

1. An assembly of an original reading device and an original placing tray comprising a combination of an original reading device having a housing of an external shape like a rectangular thick plate with an original reading window of a size of a post card in one face thereof and an image sensor provided in the housing for reading an image exhibited to the original reading window and generating an image signal expressing the read-in image, and an original placing tray for supporting a sheet exhibiting an image as positioned relative to the original reading device when the image is read in by the original reading device, the original reading device having a pair of sectoral indents of an arcuate contour each formed along an end portion of a pair of opposite sides of the rectangular contour of the face of the housing in which the original reading window is provided and a pair of cylindrical small holes opening adjacent to the pair of sectoral indents in the face where the original reading window is provided, the original placing tray having a pair of sectoral projections of an arcuate contour and a pair of columnar projections adapted to engage into the pair of sectoral indents and the pair of cylindrical holes, respectively, when the original reading device is placed upon the original placing tray as aligned thereto in a predetermined condition.

2. A combination of an original reading device and an original placing tray according to claim 1, wherein the sectoral indents have each a sectoral contour of a quarter of a circle.

3. A combination of an original reading device and an original placing tray according to claim 2, wherein the arcuate contour of each of the sectoral projections is an arc to rotatably touch an inside of each of the arcuate indents.

4. A combination of an original reading device and an original placing tray according to any one of claims 1-3, wherein the sectoral indents are formed each at one edge portion of each of a pair of shorter sides of the rectangular contour of the housing of the original reading device.

5. A combination of an original reading device and an original placing tray according to any one of claims 1-4, wherein the original placing tray has a card placing portion like a plane plate for receiving a rectangular card, a first spring plate portion formed with a cut out presenting rectangular edges to contact two sides of an edge of a card placed on the card placing portion from outside thereof, and a second spring plate portion presenting an edge to contact a side of the card placed on the card placing portion from outside thereof, the first and second spring plate portions being so conditioned that the rectangular edges and the one edge thereof projecting from a plane upper surface of the card placing portion, while elastically bent when pressed at the portions of the rectangular edges and the one edge so that the rectangular edges and the one edge are retreated from the projecting positions.
